# DEMANDE DE BREVET EUROPEEN

(11) **EP 1 885 045 A1**
(43) Date de publication de la demande: **06.02.2008**
(21) Numéro de dépôt: 07356099.7
(22) Date de dépôt: 30.07.2007
(51) Int. Cl.: H02K 5/22, H02K 15/14, E06B 9/72

(54) **Procédé d'assemblage d'un actionneur tubulaire**

(30) Priorité: 31.07.2006 FR 0606995
(71) Demandeur: Somfy SAS, 74300 Cluses (FR)
(72) Inventeur: Magli, Denis, 74440 Taninges (FR); Mercier, Patrick, 74970 Marignier (FR)
(74) Mandataire: Myon, Gérard Jean-Pierre

(57) **Abrégé**

Procédé d'assemblage d'un actionneur tubulaire pour la motorisation d'une ouverture d'un bâtiment, ce procédé comportant :
- le positionnement angulaire (410) d'une tête de fixation autour d'un axe de révolution d'un tube pour permettre l'embrochage en aveugle de premier et second connecteurs l'un dans l'autre à l'intérieur du tube, et
- le repérage direct (402) de la position angulaire du premier connecteur.

Le positionnement angulaire de la pièce de fixation est fonction du repérage direct de la position angulaire du premier connecteur.

## Description

La présente invention concerne un procédé d'assemblage d'un actionneur tubulaire.

Il existe des procédés d'assemblage d'un actionneur tubulaire pour la motorisation d'une ouverture d'un bâtiment. Ces procédés d'assemblage existants comportent :
- l'insertion d'un motoréducteur à l'intérieur d'un tube, du côté d'une première extrémité du tube, ce motoréducteur étant apte à entraîner en rotation un arbre en saillie à une première extrémité du tube et comportant au moins un premier connecteur logé sur une face du motoréducteur opposée à une face du motoréducteur portant l'arbre, et
- la fourniture d'une pièce de fixation comportant une tête destinée à être fixée sans aucun degré de liberté à un support extérieur au tube, une partie oblongue apte à être introduite à l'intérieur du tube du côté d'une seconde extrémité du tube opposée à la première extrémité, et au moins un second connecteur logé sur une face de la partie oblongue opposée à la tête, ce second connecteur étant apte à être embroché dans le premier connecteur correspondant du motoréducteur,
   la tête, la partie oblongue et le second connecteur étant rigidement fixés les uns aux autres sans aucun degré de liberté,
- le positionnement angulaire automatique de la tête de fixation autour d'un axe de révolution du tube pour permettre l'embrochage en aveugle des premier et second connecteurs l'un dans l'autre à l'intérieur du tube.

Un motoréducteur comprend typiquement un moteur électrique, par exemple, un moteur électrique synchrone, et un réducteur permettant d'obtenir le couple et la vitesse souhaités. Les motoréducteurs comprennent également éventuellement un frein.

Par position angulaire, on désigne ici un angle α, dans un plan perpendiculaire à l'axe de révolution du tube. Par exemple, l'angle α est celui défini entre une première et une seconde droites de ce plan coupant toutes les deux l'axe de révolution du tube. La première droite définit une direction de référence et la seconde droite passe par un point prédéterminé de la circonférence de l'objet dont on souhaite définir la position angulaire.

Généralement, le motoréducteur assemblé dans le tube est indexé par rapport à des formes complémentaires entre le réducteur et le tube, cette indexation étant facilement réalisable. Compte tenu des tolérances dimensionnelles sur le positionnement angulaire :
- du réducteur par rapport au tube,
- du frein éventuel par rapport au réducteur, et
- du moteur par rapport au frein éventuel ou au réducteur,
la position angulaire du premier connecteur par rapport au tube ne peut être connue qu'avec une marge d'incertitude importante. Typiquement, cette marge d'incertitude est égale à l'accumulation des marges d'erreurs sur la position angulaire du réducteur par rapport au tube, du frein éventuel par rapport au réducteur et du moteur par rapport au frein ou au réducteur.

L'embrochage en aveugle nécessite une grande précision dans le positionnement angulaire du second connecteur par rapport au premier connecteur. Or, la marge d'erreurs sur la position angulaire du premier connecteur ne permet pas d'atteindre la précision requise pour rendre systématiquement possible un embrochage en aveugle des premier et second connecteurs.

Pour remédier à ce problème, il a déjà été proposé dans la demande de brevet publiée sous le numéro FR 2 841 702 au nom de SOMFY de fournir un jeu angulaire entre le second connecteur et la partie oblongue ou la tête.

L'invention vise à remédier à ce problème en proposant un procédé d'assemblage d'un actionneur tubulaire ne nécessitant pas la fourniture d'un jeu angulaire entre les différents éléments de la pièce de fixation.

L'invention a donc pour objet un procédé d'assemblage d'un actionneur tubulaire dans lequel :
- le procédé comporte le repérage direct de la position angulaire du premier connecteur, et
- le positionnement angulaire de la pièce de fixation est fonction du repérage direct de la position angulaire du premier connecteur.

Par repérage direct on entend ici un repérage de la position angulaire du premier connecteur par rapport à une direction de référence sans utiliser à cet effet les positions angulaires du réducteur, du motoréducteur et du frein éventuel.

Le repérage direct de la position angulaire du premier connecteur permet de déterminer la position angulaire de ce dernier avec une précision nettement supérieure à celle qui serait obtenue à partir de la combinaison des positions angulaires théoriques du réducteur, du moteur et du frein éventuel. En d'autres termes, le repérage direct permet ici d'éviter l'accumulation des marges d'erreurs sur le positionnement angulaire du réducteur, du moteur et du frein éventuel. Ainsi, le repérage direct rend possible la connaissance de la position angulaire du premier connecteur avec une marge d'erreurs strictement inférieure à l'accumulation des marges d'erreurs sur les positionnements angulaires du réducteur, du moteur et du frein éventuel.

Dès lors, en positionnant la pièce de fixation en fonction du repérage direct, l'embrochage en aveugle des premier et second connecteurs peut être rendu systématiquement possible sans qu'il soit nécessaire de prévoir un jeu angulaire dans la pièce de fixation.

Les modes de réalisation de ce procédé d'assemblage peuvent comporter une ou plusieurs des caractéristiques suivantes :
- le procédé comporte la fourniture de formes complémentaires correspondantes sur les faces sur lesquelles sont logés, respectivement, les premier et second connecteurs, et dans lequel le repérage direct et le positionnement angulaire sont simultanément réalisés, lors de l'introduction de la partie oblongue de la pièce de fixation à l'intérieur du tube, en faisant tourner la pièce de fixation à l'intérieur du tube jusqu'à ce que les formes prévues sur les faces de la partie oblongue et du motoréducteur soient en correspondance ;
- à la fin de l'introduction de la partie oblongue à l'intérieur du tube, le procédé comporte l'embrochement des premier et second connecteurs l'un dans l'autre par un mouvement de translation, puis la réalisation d'un mécanisme de retenue propre à bloquer, en translation et en rotation, la pièce de fixation par rapport au tube ;
- le repérage direct comporte :
   - la réalisation d'un repère de la position angulaire du premier connecteur, et
   - le positionnement du premier connecteur par rapport à ce repère pour que les positions angulaires du premier connecteur et du repère soient reliées par une relation prédéterminée, et
- le positionnement angulaire de la pièce de fixation est fonction de la position angulaire de ce repère ;
- le positionnement du premier connecteur par rapport au repère est réalisé avant ou pendant l'insertion du motoréducteur à l'intérieur du tube ;
- le positionnement angulaire du premier connecteur est réalisée par un outil propre à être introduit à l'intérieur du tube par la seconde extrémité, et à maintenir constante l'orientation angulaire du premier connecteur par rapport au repère lors de l'insertion du motoréducteur à l'intérieur du tube ;
- le repérage direct comporte la mesure de la position angulaire du premier connecteur à l'aide d'un capteur et la mémorisation de cette position angulaire mesurée, et dans lequel le positionnement angulaire de la pièce de fixation est fonction de la position angulaire mesurée ;
- le repérage direct comporte la mesure de la position angulaire du premier connecteur à l'aide d'un capteur et la réalisation d'un repère de la position angulaire mesurée, et dans lequel le positionnement angulaire de la pièce de fixation est fonction de la position angulaire de ce repère ;
- le repère est réalisé sur le tube,
- le repère est une encoche débouchant sur la seconde extrémité du tube.

Ces modes de réalisation du procédé d'assemblage présentent en outre les avantages suivants :
- la réalisation simultanée du repérage direct et du positionnement angulaire permet d'accélérer l'assemblage de l'actionneur tubulaire,
- la réalisation d'un repère de la position angulaire du premier connecteur permet ensuite le positionnement angulaire précis de la tête de fixation par rapport à ce repère,
- le positionnement angulaire du premier connecteur par rapport au repère réalisé, avant ou pendant l'insertion du motoréducteur, permet d'accroître la précision de ce positionnement nécessaire à un embrochage en aveugle,
- l'utilisation d'un outil propre à maintenir constante l'orientation angulaire du premier connecteur par rapport à un repère lors de son insertion à l'intérieur du tube permet le repérage direct avec précision de la position angulaire du premier connecteur par rapport à ce repère,
- mesurer la position angulaire du premier connecteur permet un repérage direct précis,
- utiliser les encoches débouchant sur la seconde extrémité en tant que repère rend également possible l'utilisation de ces encoches pour immobiliser en rotation la pièce de fixation à l'intérieur du tube.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un actionneur tubulaire,
- la figure 2 est un organigramme d'un premier procédé d'assemblage de l'actionneur tubulaire de la figure 1,
- les figures 3 et 4 sont des illustrations schématiques de l'actionneur tubulaire en cours d'assemblage à l'aide du procédé de la figure 2,
- la figure 5 est un organigramme d'un second procédé d'assemblage de l'actionneur tubulaire de la figure 1,
- la figure 6 à 7 sont des illustrations schématiques de l'actionneur tubulaire en cours d'assemblage à l'aide du procédé de la figure 5,
- la figure 8 est un organigramme d'un troisième procédé d'assemblage de l'actionneur tubulaire de la figure 1,
- la figure 9 est une illustration schématique de l'actionneur tubulaire en cours d'assemblage à l'aide du procédé de la figure 7,
- la figure 10 est un organigramme d'un quatrième procédé d'assemblage de l'actionneur tubulaire de la figure 1, et
- les figures 11 à 12 sont des illustrations schématiques de l'actionneur tubulaire en cours d'assemblage à l'aide du procédé de la figure 9.

Dans ces figures, les mêmes références sont utilisées pour désigner les mêmes éléments.

Dans la suite de cette description, les caractéristiques et fonctions bien connues de l'homme du métier ne sont pas décrites en détail.

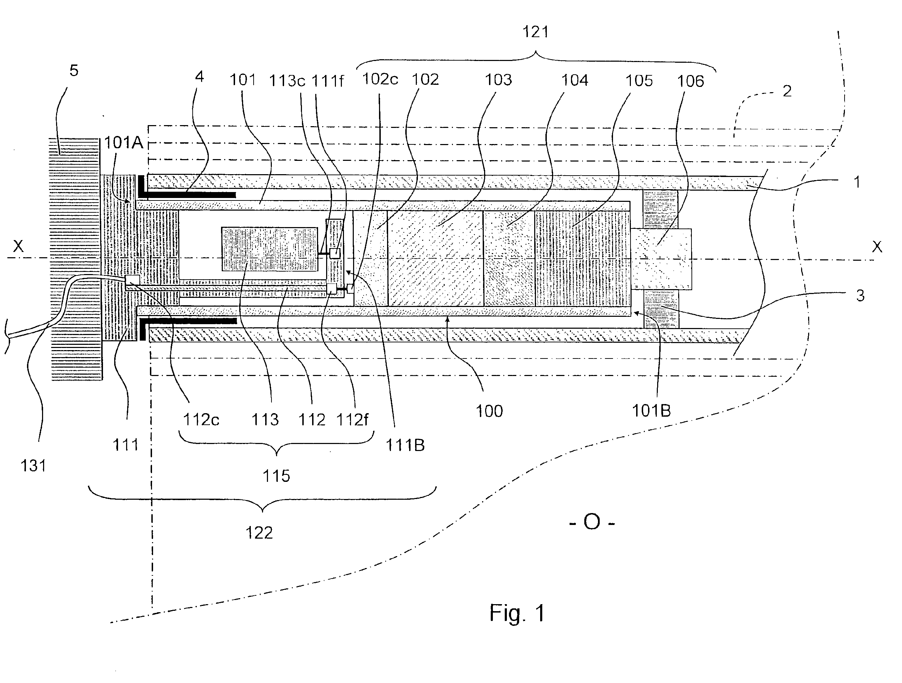

La figure 1 représente un actionneur tubulaire 100 destiné à entraîner un tube d'enroulement 1 sur lequel peut être plus ou moins enroulé un tablier 2 d'obturation d'une ouverture O. Le tube 1 est entraîné par l'actionneur 100 en rotation autour d'un axe de révolution X-X qui est disposé horizontalement en partie haute de l'ouverture. L'ouverture O est, par exemple, une ouverture ménagée dans les parois d'un bâtiment et l'actionneur 100, le tube 1 et le tablier 2 forment alors un volet roulant motorisé.

L'actionneur 100 comprend un tube cylindrique 101 dans lequel est monté, en étant enfilé par au moins une extrémité du tube, un motoréducteur 121 composé :
- d'un moteur 103 équipé d'une pièce de connectique 102,
- d'un frein 104, et
- d'un réducteur 105.

Le réducteur 105 est équipé d'un arbre de sortie 106 entraînant une couronne-roue 3 solidaire en rotation du tube 1. Une fois le motoréducteur inséré à l'intérieur du tube 101, l'arbre 106 fait saillie à une extrémité 101 B du tube 101.

Le tube d'enroulement 1 tourne autour de l'axe X-X et du tube fixe 101 grâce à deux liaisons pivot. Une couronne 4 montée sur la périphérie extérieure du tube 101 assure la première liaison pivot. La deuxième liaison pivot se situe à l'autre extrémité du tube 1 et n'a pas été représentée ici.

L'actionneur 100 comprend aussi une pièce de fixation 122.

La pièce de fixation 122 comprend :
- un tête 111 dite « tête d'actionneur » destinée à obturer, une fois assemblée, une extrémité 101A du tube 101,
- une partie oblongue destinée à être insérée à l'intérieur du tube 101, et
- un connecteur 112f logé sur une face 111 B de la partie oblongue opposée à la tête 111.

Le connecteur 112f est apte à être embroché dans un connecteur 102c fixé sans aucun degré de liberté sur une face de la pièce de connectique 102 tournée vers l'extrémité 101A.

Les connecteurs 102c et 112f sont excentrés par rapport à l'axe X-X.

Dans ce mode de réalisation, un dispositif de commande 115 pour le pilotage du moteur 103 est logé à l'intérieur de la partie oblongue de la pièce 122.

Le dispositif 115 comprend des moyens de contrôle du moteur 103 tels que, par exemple, un dispositif de comptage, un module d'arrêt automatique en fin de course du tablier 2, un module d'arrêt automatique du moteur 103 en réponse à la présence d'un obstacle ou un module d'arrêt en position intermédiaire ou encore tout autre module de commande apte à exécuter un programme particulier de commande du moteur 103. De tels dispositifs de commande sont décrits, par exemple, dans les brevets EP 0 434 614, EP 0 524 152, EP 0 568 492 et EP 0 671 542.

Ici, le dispositif de commande 115 comprend une carte électronique 112, tel qu'un circuit imprimé sur laquelle sont montés différents composants électroniques non représentés nécessaires à la commande du moteur 103. Une extrémité de cette carte électronique est elle-même enchâssée dans la tête 111.

Les pistes de cette carte 112 sont électriquement raccordées au connecteur 112f, ce qui permet de raccorder la carte électronique 112 au moteur 103 par l'intermédiaire du connecteur 102c et la pièce de connectique 102.

Les pistes de la carte électronique 112 sont également raccordées à un connecteur 112c logé dans la tête 111. Le connecteur 112c permet de raccorder la carte 112 à d'autres composants électriques logés à l'intérieur du bâtiment par l'intermédiaire d'une liaison filaire 131. Par exemple, la liaison filaire 131 permet d'alimenter la carte électronique 112.

Ici, la pièce de fixation 122 comprend également un condensateur 113 nécessaire au fonctionnement du dispositif de commande 115. Ce condensateur 113 est enfiché sur un connecteur 111f, raccordé à la carte électronique 112. Ce connecteur 111f peut être directement fixé sur la carte électronique 112 ou disposé sur l'extrémité de la partie oblongue de la pièce de fixation 122 et raccordé à la carte électronique 112 par des pistes non représentées. L'extrémité de la partie oblongue peut être une pièce de connectique indépendante intégrant le connecteur 111f sur lequel s'enfiche le condensateur, le connecteur 112f sur lequel se connecte le motoréducteur et un connecteur sur lequel se connecte la carte 112. Cette pièce de connectique se fixe sans aucun degré de liberté sur la pièce de fixation 122.

Lors du fonctionnement de l'actionneur tubulaire 100, le moteur 103 entraîne en rotation l'arbre 106 qui à son tour entraîne en rotation le tube 1 par l'intermédiaire de la couronne-roue 3. Par exemple, lorsqu'un tel actionneur 100 est installé dans un caisson de volet roulant, la rotation de l'arbre 106 entraîne l'ouverture et, en alternance, la fermeture de l'ouverture O.

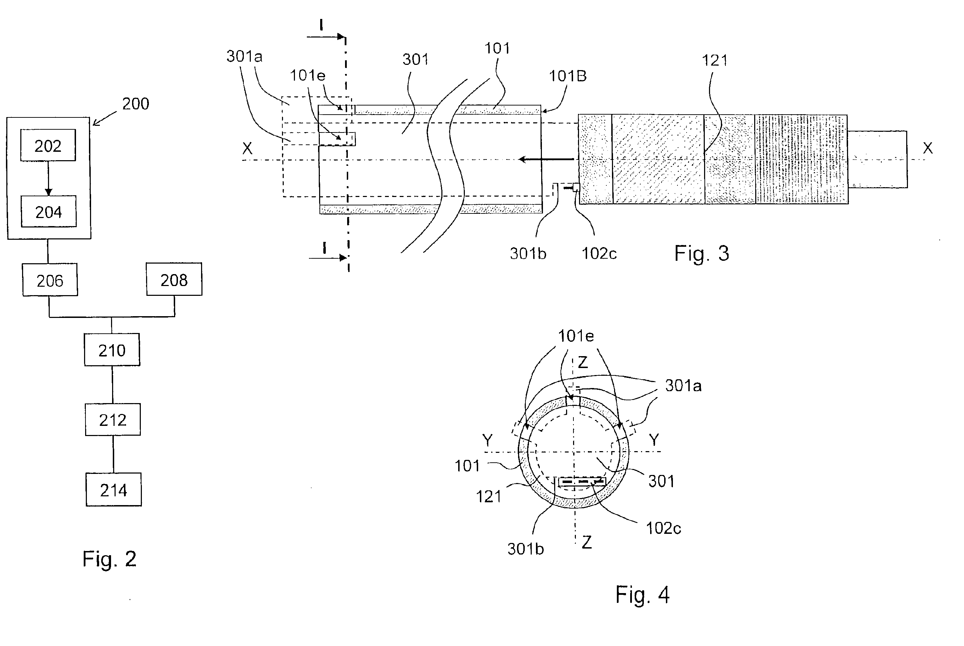

La figure 2 représente un premier procédé d'assemblage de l'actionneur 100.

Initialement, lors d'une étape 200 de repérage direct de la position angulaire du connecteur 102c, il est procédé comme suit :
- on réalise, lors d'une opération 202, un repère visible depuis l'extérieur du tube 101 même après l'insertion du motoréducteur 121 à l'intérieur du tube 101 et avant l'insertion de la partie oblongue de la tête 122, puis
- lors d'une opération 204, on positionne angulairement le connecteur 102c du motoréducteur 121 par rapport au repère réalisé lors de l'opération 202.

Par exemple, lors de l'opération 202, des encoches 101 e (Figures 3 et 4) s'étendant parallèlement à l'axe X-X sont réalisées dans le tube 101 à proximité de l'extrémité 101A. Ces encoches 101e débouchent à l'extrémité 101A du tube 101. Couramment, le tube fourni intègre ces encoches. L'opération 202 est donc facultative.

Lors de l'opération 204, un outil tel qu'un nez 301 est utilisé pour positionner angulairement le connecteur 102c par rapport aux encoches 101e.

Cet outil 301 comporte à l'une de ses extrémités des nervures 301 a aptes à coulisser dans les encoches respectives 101 e de manière à placer l'outil 301 dans une position angulaire prédéterminée par rapport au tube 101.

Une autre extrémité de l'outil 301, destinée à être insérée à l'intérieur du tube 101, comporte une forme 301b complémentaire d'une forme correspondante du connecteur 102c. Par exemple, la forme 301 b est un méplat complémentaire d'un méplat correspondant du connecteur 102c. Lorsque les formes complémentaires du connecteur 102c et de l'outil 301 sont imbriquées l'une dans l'autre, la position angulaire du connecteur 102c est reliée à la position angulaire de l'outil 301 par une relation prédéterminée. Ainsi l'opération 204 consiste à insérer les nervures 301 a dans les encoches 101e afin de positionner angulairement l'outil 301. Dans cet état, la forme complémentaire 301 b de l'outil 301 fait saillie à l'extérieur du tube 101 par l'extrémité 101B de ce tube.

Ensuite, les formes complémentaires de l'outil 301 et du connecteur 102c sont imbriquées l'une dans l'autre de manière à positionner angulairement le connecteur 102c par rapport à l'outil 301.

Une fois les opérations 202 et 204 réalisées, lors d'une étape 206, le motoréducteur est inséré à l'intérieur du tube 101 par l'extrémité 101 B. Lors de l'étape 206, le motoréducteur 121 et l'outil 301 sont déplacés en translation dans une direction colinéaire à l'axe X-X comme indiqué par la flèche F. Plus précisément, lors de l'insertion du motoréducteur 121 à l'intérieur du tube 101, les formes complémentaires de l'outil 301 et du connecteur 102c sont maintenues imbriquées l'une dans l'autre de manière à maintenir constante la position angulaire du connecteur 102c.

Par exemple, lors de l'étape 206, le motoréducteur 121 est chassé en force à l'intérieur du tube 101, de sorte qu'après l'étape 206, le motoréducteur 121 est bloqué en translation et en rotation à l'intérieur du tube 101.

En parallèle aux étapes 200 et 206, on procède à la fourniture, lors d'une étape 208, de la pièce de fixation 122.

A l'issue des étapes 206 et 208, lors d'une étape 210, la pièce de fixation 122 est positionnée angulairement par rapport aux mêmes encoches 101e que celles utilisées pour positionner angulairement le connecteur 102c. Ainsi, à l'issue de l'étape 210, les connecteurs 112f et 102c sont en vis-à-vis l'un de l'autre. L'étape 210 est par exemple réalisée automatiquement à l'aide d'un robot

Ensuite, lors d'une étape 212, la pièce de fixation 122 est uniquement déplacée en translation de manière à introduire sa partie oblongue à l'intérieur du tube 101.

Par exemple, la pièce de fixation est également enchâssée en force à l'intérieur du tube 101 à partir de l'extrémité 101A.

En fin de course de la pièce de fixation, lors d'une étape 214, les connecteurs 112f et 102c s'embrochent à l'intérieur du tube 101.

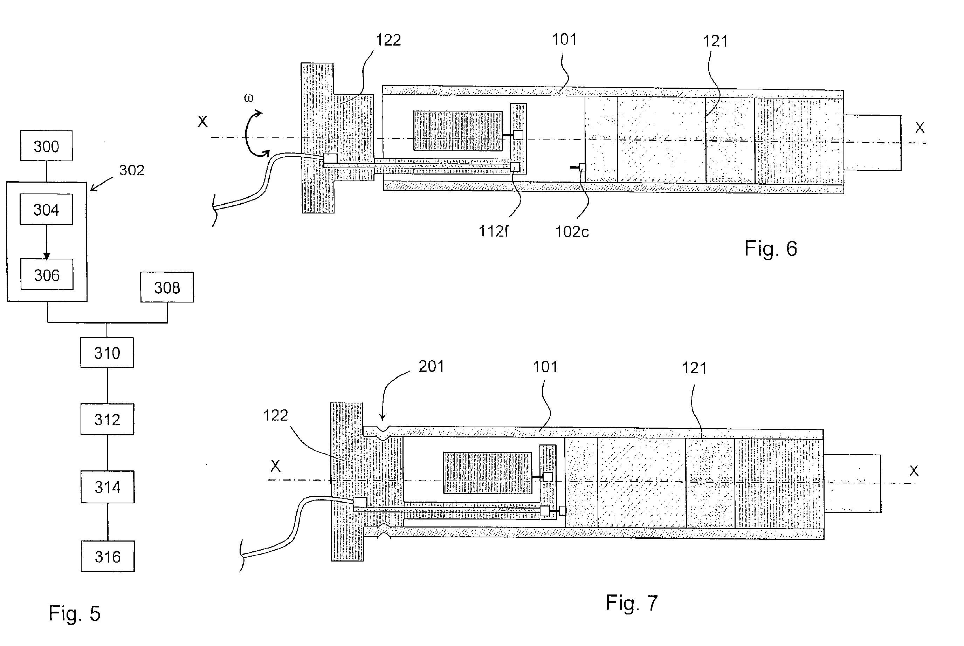

La figure 5 représente un second procédé d'assemblage de l'actionneur 100.

Initialement, lors d'une étape 300, le motoréducteur 121 est inséré à l'intérieur du tube 101 par l'extrémité 101B. Toutefois, contrairement à l'étape 206, lors de l'étape 300, le positionnement angulaire du premier connecteur à l'intérieur du tube 101 est ici quelconque.

L'insertion est, par exemple, réalisée par un chassage en force comme lors de l'étape 206.

Ensuite, on procède à une étape 302 de repérage direct de la position angulaire du connecteur 102c. Plus précisément, lors d'une opération 304, la position angulaire du connecteur 102c est mesurée puis mémorisée, lors d'une opération 306.

En parallèle aux étapes 300 et 302, on procède à une étape 308 de fourniture de la pièce de fixation 122.

Ensuite, lors d'une étape 310, le positionnement angulaire de la pièce 122 est réalisé en fonction de la position angulaire mémorisée lors de l'opération 306. La position angulaire du tube 101 est maintenue constante entre l'opération 306 et l'étape 310. Par exemple, le positionnement angulaire de la pièce 122 est réalisé automatiquement par un robot d'assemblage en fonction de la position mémorisée.

Lors de l'étape 312 suivante, la partie oblongue de la pièce 122 est insérée à l'intérieur du tube 101 par un mouvement de translation seulement. Ici l'insertion n'est pas réalisée par un chassage en force.

Ensuite, l'étape 314 est identique, à l'étape 214 du procédé de la figure 2.

Enfin, lors d'une étape 316, on procède à la réalisation d'un mécanisme de retenue propre à bloquer en translation et en rotation la pièce 122 à l'intérieur du tube 101. Le blocage en rotation doit être suffisant pour que le couple exercé par le motoréducteur 121 sur le tube 1 ne se traduise pas par une rotation du tube 101 par rapport au support fixe 5. Par exemple, comme illustré sur la figure 7, ce mécanisme de retenue est réalisé par poinçonnage de la périphérie extérieure du tube 101 au niveau de l'extrémité 101A. D'autres manières de procéder tel que le sertissage peuvent être mises en oeuvre.

La figure 6 représente l'actionneur 100 lors de l'étape 310. Le positionnement angulaire de la pièce 122 est représenté par une flèche ω sur la figure 6.

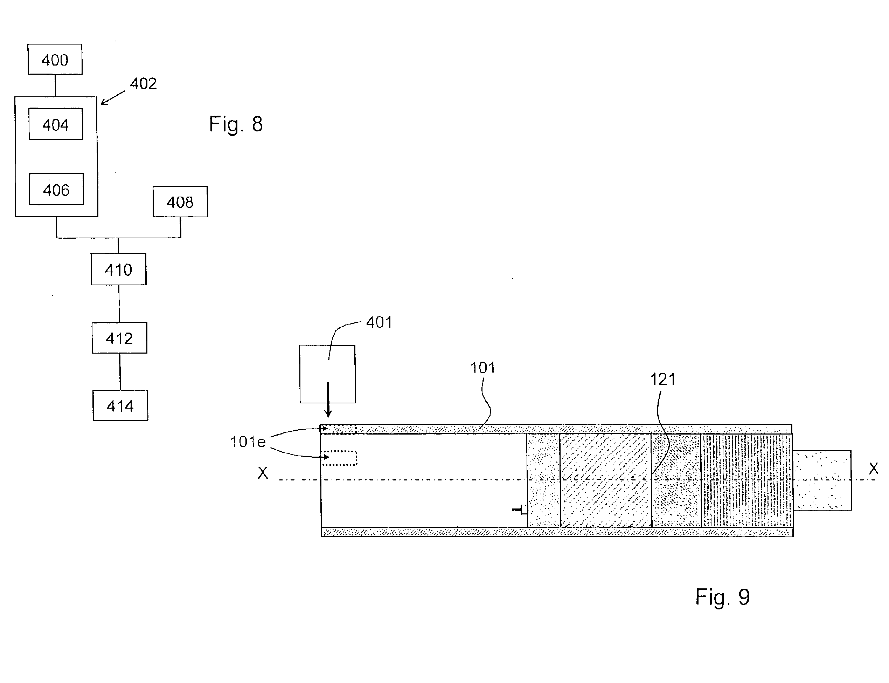

La figure 8 représente un troisième procédé d'assemblage de l'actionneur 100.

On procède d'abord, lors d'une étape 400, à l'insertion du motoréducteur 121 à l'intérieur du tube 101. Par exemple, l'étape 400 est identique à l'étape 300.

Ensuite, on procède à une étape 402 de repérage direct de la position angulaire du connecteur 102c. Plus précisément, lors d'une opération 404, la position angulaire du connecteur 102c est mesurée, puis lors d'une opération 406, un repère de la position angulaire mesurée est réalisé sur le tube. L'opération 404 est, par exemple, réalisée à l'aide d'un capteur dont une extrémité est susceptible d'être introduite à l'intérieur du tube 101 par l'extrémité 101A. Cette extrémité permet de déterminer par palpation la position angulaire du connecteur 102c.

L'opération 406, consiste, par exemple, à réaliser des encoches telles que les encoches 101e de la figure 9 à l'extrémité du tube 101. Les encoches sont, par exemple, réalisées à l'aide d'un outil de poinçonnage 401.

En parallèle aux étapes 400 et 402, on procède à une étape 408 de fourniture de la pièce de fixation 122.

Ensuite, on procède successivement aux étapes 410, 412 et 414 respectivement identiques aux étapes 210, 212 et 214.

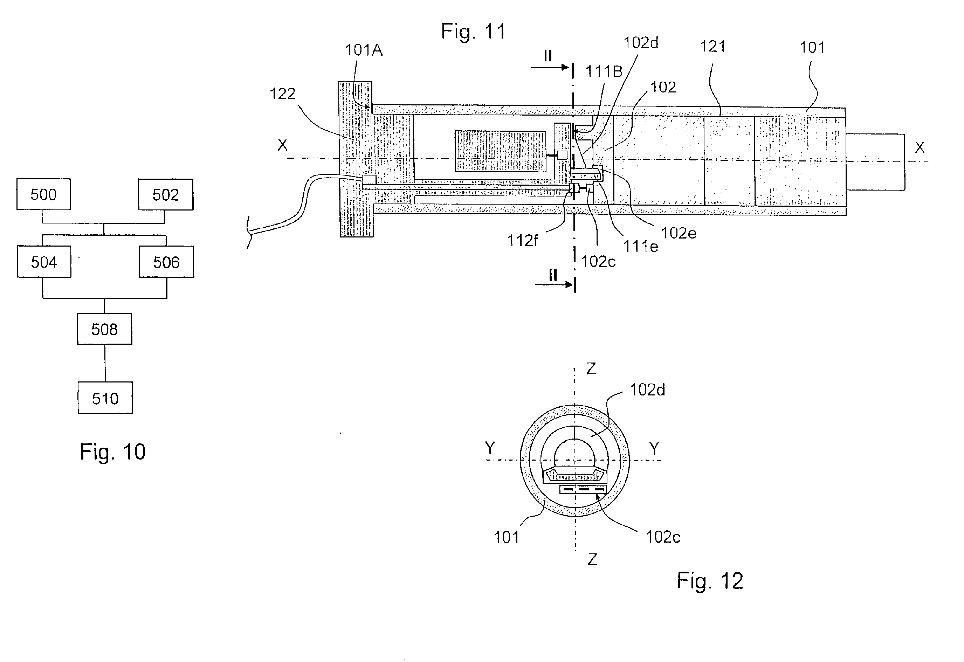

La figure 10 représente un quatrième procédé d'assemblage de l'actionneur 100.

Initialement, lors d'une étape 500, on insère le motoréducteur 121 à l'intérieur du tube 101. Par exemple, l'étape 500 est identique à l'étape 300 ou 400.

En parallèle, on procède à une étape 502 de fourniture de la pièce de fixation 122.

Ensuite, on introduit, lors d'une étape 504, la partie oblongue de la pièce 122 à l'intérieur du tube 101 par l'extrémité 101A. En parallèle à l'étape 504, le repérage direct de la position angulaire du connecteur 102c et le positionnement angulaire du connecteur 112f sont simultanément réalisés, lors d'une étape 506.

A cet effet, comme représenté dans les figures 11 et 12, des formes complémentaires sont prévues, respectivement, sur la face 111 B de la pièce 122 et sur la face de la pièce de connectique 102 tournée vers l'extrémité 101A.

Par exemple, la forme complémentaire prévue sur la face du motoréducteur tournée vers l'extrémité 101A est une pente 102d. La forme complémentaire prévue sur la face 111 B de la pièce 122 est une protubérance 111e.

Ces formes complémentaires 102d et 111e sont ici conçues pour entraîner en rotation la pièce 122, lorsque celle-ci est introduite à l'intérieur du tube 101 par un mouvement de translation, jusqu'à ce que les connecteurs 112f et 102c soient en vis-à-vis. Par exemple, ici, la pente 102d s'étend le long de la périphérie intérieure du tube 101 de manière à ce que l'extrémité de la protubérance 111e glisse sur cette pente, jusqu'à ce que celle-ci tombe dans un logement 102e réalisé dans la pièce de connectique 102. A ce moment là, les connecteurs 102c et 112f sont en vis-à-vis. Puis, lors d'une étape 508, les connecteurs 102c et 112f sont embrochés l'un dans l'autre.

Enfin, l'étape 510 est identique à l'étape 316.

De nombreux autres modes de réalisation sont possibles. Par exemple, dans le procédé de la figure 2, les opérations 202 et 204 sont réalisées simultanément.

Pour la mise en oeuvre du procédé de la figure 9, d'autres types de formes complémentaires peuvent permettre le positionnement en rotation de la pièce de fixation 122. Par exemple, des formes complémentaires telles qu'un cône et un trou peuvent permettre un positionnement angulaire de la pièce de fixation 122.

Dans une autre variante, le dispositif de commande 115 est situé à l'intérieur du motoréducteur et non pas dans la tête de fixation. Dans ce cas là, le connecteur 112f est directement électriquement raccordé au câble 131.

## Revendications

1. Procédé d'assemblage d'un actionneur tubulaire pour la motorisation d'une ouverture d'un bâtiment, ce procédé comportant :
- l'insertion (206 ; 300 ; 400 ; 500) d'un motoréducteur à l'intérieur d'un tube, du côté d'une première extrémité (101 B) du tube, ce motoréducteur étant apte à entraîner en rotation un arbre en saillie à une première extrémité du tube et comportant au moins un premier connecteur logé sur une face du motoréducteur opposée à une face du motoréducteur portant l'arbre, et
- la fourniture (208 ; 308 ; 408 ; 502) d'une pièce de fixation comportant une tête destinée à être fixée sans aucun degré de liberté à un support extérieur au tube, une partie oblongue apte à être introduite à l'intérieur du tube du côté d'une seconde extrémité (101A) du tube opposée à la première extrémité, et au moins un second connecteur logé sur une face de la partie oblongue opposée à la tête, ce second connecteur étant apte à être embroché dans le premier connecteur correspondant du motoréducteur,
la tête, la partie oblongue et le second connecteur étant rigidement fixés les uns aux autres sans aucun degré de liberté,
- le positionnement (210 ; 310 ; 410 ; 504) angulaire de la tête de fixation autour d'un axe de révolution du tube pour permettre l'embrochage en aveugle des premier et second connecteurs l'un dans l'autre à l'intérieur du tube,
**caractérisé en ce que** :
- le procédé comporte le repérage direct (200 ; 302 ; 402 ; 504) de la position angulaire du premier connecteur, et
- le positionnement angulaire de la pièce de fixation est fonction du repérage direct de la position angulaire du premier connecteur.

2. Procédé selon la revendication 1, dans lequel le procédé comporte la fourniture (504) de formes complémentaires correspondantes sur les faces sur lesquelles sont logés, respectivement, les premier et second connecteurs, et dans lequel le repérage direct (504) et le positionnement angulaire (504) sont simultanément réalisés, lors de l'introduction de la partie oblongue de la pièce de fixation à l'intérieur du tube, en faisant tourner la pièce de fixation à l'intérieur du tube jusqu'à ce que les formes prévues sur les faces de la partie oblongue et du motoréducteur soient en correspondance.

3. Procédé selon la revendication 2, dans lequel à la fin de l'introduction de la partie oblongue à l'intérieur du tube, le procédé comporte l'embrochement (508) des premier et second connecteurs l'un dans l'autre par un mouvement de translation, puis la réalisation (510) d'un mécanisme de retenue propre à bloquer, en translation et en rotation, la pièce de fixation par rapport au tube.

4. Procédé selon la revendication 1, dans lequel :
- le repérage direct comporte :
. la réalisation (202) d'un repère de la position angulaire du premier connecteur, et
. le positionnement (204) du premier connecteur par rapport à ce repère pour que les positions angulaires du premier connecteur et du repère soient reliées par une relation prédéterminée, et
- le positionnement angulaire (210) de la pièce de fixation est fonction de la position angulaire de ce repère.

5. Procédé selon la revendication 4, dans lequel le positionnement du premier connecteur par rapport au repère est réalisé avant ou pendant l'insertion du motoréducteur à l'intérieur du tube.

6. Procédé selon la revendication 5, dans lequel le positionnement angulaire (204) du premier connecteur est réalisée par un outil propre à être introduit à l'intérieur du tube par la seconde extrémité, et à maintenir constante l'orientation angulaire du premier connecteur par rapport au repère lors de l'insertion du motoréducteur à l'intérieur du tube.

7. Procédé selon la revendication 1, dans lequel le repérage direct (302) comporte la mesure (304) de la position angulaire du premier connecteur à l'aide d'un capteur et la mémorisation de cette position angulaire mesurée, et dans lequel le positionnement angulaire (310) de la pièce de fixation est fonction de la position angulaire mesurée.

8. Procédé selon la revendication 1, dans lequel le repérage direct (402) comporte la mesure (404) de la position angulaire du premier connecteur à l'aide d'un capteur et la réalisation (406) d'un repère de la position angulaire mesurée, et dans lequel le positionnement angulaire (410) de la pièce de fixation est fonction de la position angulaire de ce repère.

9. Procédé selon la revendication 4 ou 8, dans lequel le repère est réalisé sur le tube.

10. Procédé selon la revendication 9, dans lequel le repère est une encoche (101e) débouchant sur la seconde extrémité du tube.
